# EUROPÄISCHE PATENTSCHRIFT

(11) **EP 1 251 046 B1**
(45) Veröffentlichungstag und Bekanntmachung des Hinweises auf die Patenterteilung: **28.07.2004**
(21) Anmeldenummer: 02008153.5
(22) Anmeldetag: 12.04.2002
(51) Int. Cl.: B60R 21/20

(54) **Gassackmodul**
Air-bag module
Coussin gonflable

(30) Priorität: 17.04.2001 DE 20106599 U
(43) Veröffentlichungstag der Anmeldung: 23.10.2002
(73) Patentinhaber: TRW Automotive GmbH, 73553 Alfdorf (DE)
(72) Erfinder: Lutz, Joachim, 73579 Schechingen (DE); Mohr, Robert, 71384 Weinstadt (DE)
(74) Vertreter: Sties, Jochen, Dipl.-Ing.

(56) Entgegenhaltungen:
- US-A- 5 873 598
- US-A- 5 988 677

## Beschreibung

Die Erfindung betrifft ein Gassack-Modul für ein Fahrzeuginsassen-Rückhaltesystem, mit einem Gehäuse und einem Gassack, der zu einem Gassackpaket gefaltet im Gehäuse angeordnet ist und durch Gas von einer Druckgasquelle aufgeblasen werden kann, wobei das Gehäuse eine Austrittsöffnung aufweist, die eine Austrittsebene definiert.

Derartige Gasssack-Module sind in der Regel von quaderförmiger Gestalt. Sie werden bevorzugt auf der Beifahrerseite in die Instrumententafel eingebaut, wie es beispielsweise in der gattungsbildenden DE 197 36 243 A1 gezeigt ist, und zwar mit ihrer Längsachse quer zur Fahrtrichtung. Bisher wurden die Gassack-Module mit einer möglichst großen Austrittsöffnung für den Gassack versehen, deren Breite, also ihre Abmessung quer zur Längsachse in der Austrittsebene, meist annähernd so groß ist wie die größte Breite des Modulgehäuses in derselben Richtung, damit das Gassackpaket schnell und ohne Hindernis ausgestoßen werden kann. Eine derart große Austrittsöffnung bedingt jedoch auch in der Instrumententafel eine entsprechend große Abdeckklappe. Um die Belastung für den Fahrzeuginsassen minimal zu halten, wenn sich dieser nicht in einer optimalen Sitzposition befindet, sollte der Einbauort für das Gassack-Modul jedoch möglichst weit entfernt vom Fahrzeuginsassen, also nahe der Windschutzscheibe liegen.

Aufgabe der Erfindung ist es daher, ein Gassack-Modul zu schaffen, das nahe der Frontscheibe eingebaut werden kann.

Diese Aufgabe wird gelöst durch ein Gassack-Modul der eingangs genannten Art, bei dem die Breite der Austrittsöffnung geringer ist, als die größte Breite des Gassackpaketes, gemessen parallel zur Austrittsebene. Dadurch kann die Abdeckklappe in der Instrumententafel ebenfalls kleiner sein und demzufolge eine geringere Masse aufweisen. Dadurch ist es möglich, das Gassack-Modul näher an der Frontscheibe und somit weiter vom Fahrzeuginsassen entfernt einzubauen.

Weitere vorteilhafte Ausgestaltungen der Erfindung ergeben sich aus den Unteransprüchen.

Die Erfindung wird nachfolgend anhand einer bevorzugten Ausführungsform ausführlich beschrieben. Dabei wird Bezug genommen auf die beigefügten Zeichnungen, in welchen zeigt:
- Figur 1 eine perspektivische Ansicht eines erfindungsgemäßen Gassack-Moduls;
- Figur 2 einen Querschnitt durch das Gassack-Modul aus Fig ur 1 im nicht ausgelösten Zustand; und
- Figur 3 einen Querschnitt durch das Gassack-Modul aus Figur 1 im ausgelösten Zustand.

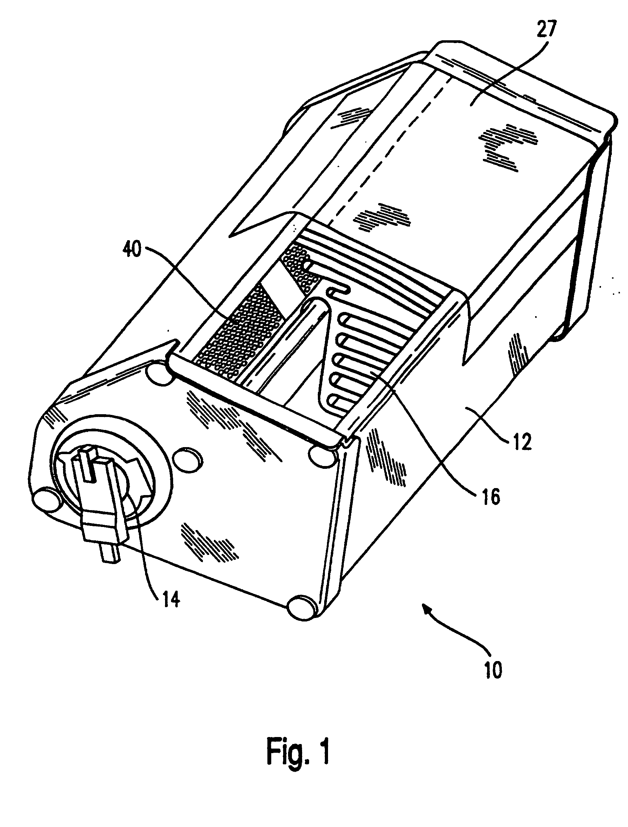

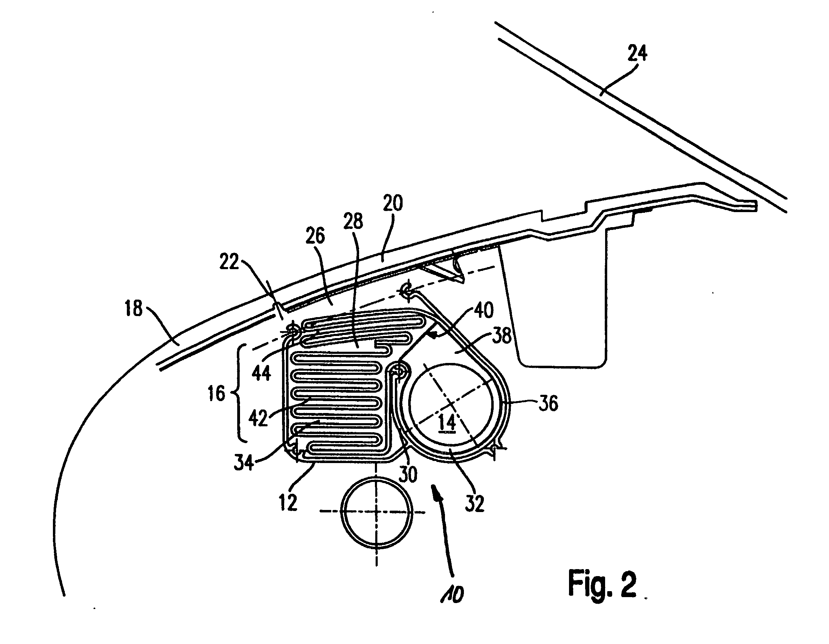

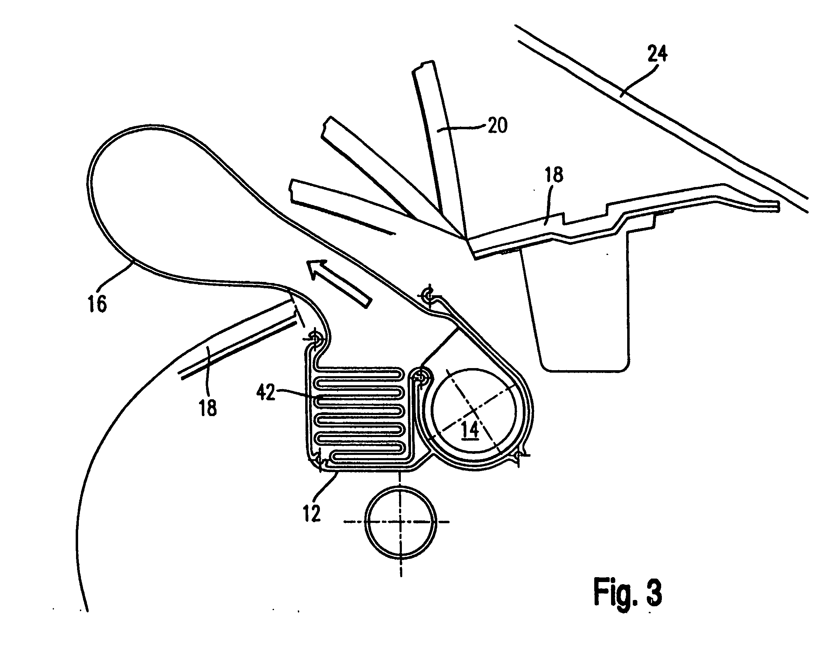

Das Gassack-Modul 10 in den Figuren 1 bis 3 weist ein Gehäuse 12 auf, das einen rohrförmigen Gasgenerator 14 und einen gefalteten Gassack 16 enthält. In den Figuren 2 und 3 ist zu sehen, daß das Gassack-Modul 10 in eine Armaturentafel 18 eines Kraftfahrzeugs eingebaut ist, und zwar auf der Beifahrerseite. Die Armaturentafel 18 ist mit einer Abdeckklappe 20 versehen, die das Gehäuse 12 abdeckt. An der zum Fahrzeuginsassen weisenden Kante ist die Abdeckklappe 20 über eine Sollbruchstelle 22 mit der Armaturentafel 18 verbunden ist, so daß sie zur Frontscheibe 24 hin aufklappen kann.

Das Gehäuse 12 ist vorzugsweise aus einem stranggepreßten Aluminiumprofil gebildet und weist an seiner der Armaturentafel 18 benachbarten Seite eine Austrittsöffnung 26 für den Gassack 16 auf, welche eine Austrittsebene definiert. Die Breite des Gehäuses 12 verjüngt sich zur Austrittsöffnung 26 hin, so daß die Seitenwände des Gehäuses 12 im Bereich der Austrittsöffnung 26 einen trichterförmigen Schußkanal 28 bilden, durch den der Gassack 16 aus dem Gehäuse 12 ausgestoßen werden kann. Das Gehäuse 12 ist durch eine Trennwand 30 in einen Generatorraum 32 und einen Gassackraum 34 geteilt ist, die beide in den Schußkanal 28 münden. Die Austrittsöffnung 26 ist mit einer Schutzhülle 27 mit Perforation verschlossen, um das Innere des Gassack-Modul 10 vor Verschmutzung und Beschädigung zu schützen.

Im Generatorraum 32 ist der Gasgenerator 14 angeordnet, der als Druckgasquelle für das Entfalten des Gassacks 16 dient. Der Gasgenerator 14 ist vollständig radial von einem Diffusorblech 36 umschlossen. Das Diffusorblech 36 weist einen zum Gassack 16 hin gerichteten Austrittskanal 38 auf, der in den Schußkanal 28 ragt und das vom Gassack erzeugte Gas zum Gassack 16 leiten kann. Die an den Gassack 16 grenzende Wand des Austrittskanals 38 ist mit Austrittsöffnungen 40 für das vom Gasgenerator 14 erzeugte Druckgas versehen.

Der Gassack 16 ist zu einem Gassackpaket gefaltet, wobei das Gassackpaket aus einem unteren Stapel 42 und einem oberen Stapel 44 besteht. Der untere Stapel 42 umfaßt dabei etwa 2/3 des Gassackes 16 und ist zickzackgefaltet im Gassackraum 34 untergebracht, während der obere Stapel 44 das restliche Drittel des Gassackes 16 ebenfalls zickzackgefaltet enthält und im Schußkanal 28 direkt vor der Austrittsöffung 26 angeordnet ist. Wie in Figur 2 zu sehen ist, ist die Breite der Austrittsöffnung 26 kleiner als die maximale Breite des oberen Stapels 44 und zwar gemessen in einer Ebene parallel zur Austrittsebene. Es hat sich jedoch gezeigt, daß die verringerte Breite der Austrittsöffnung 26 die Entfaltung des Gassackes nicht wesentlich behindert.

Selbstverständlich ist auch eine andere Aufteilung des Gassackpakets, gegebenenfalls mit anderen, auch für die verschiedenen Stapel unterschiedlichen Faltungsarten denkbar.

Der Gassack 16 umschließt das Diffusorblech 36 im Generatorraum 32, wodurch der Gassack 16 gleichzeitig im Gassack-Modul 10 befestigt ist.

Im Auslösefall (Figur 3) wird der Gasgenerator 14 aktiviert, so daß von ihm erzeugtes Druckgas durch den Austrittskanal 38 in den Schußkanal geleitet wird. Durch den Druck des Gases wird der obere Stapel 44 aus dem Schußkanal gedrückt, wobei er die Abdeckklappe 20 an der Sollbruchstelle 22 aufreißt, so daß die Abdecklappe die Austrittsöffnung 26 freigibt. Damit kann der Gassack 16 in der durch den Pfeil angedeuteten Austrittsrichtung aus dem Gehäuse 12 austreten.

Da der oben liegende Stapel 44 des Gassackpaketes 16 bei der Auslösung zuerst ausgeworfen wird und den der Frontscheibe 24 zugewandten Teil des Gassackes bildet, entfaltet sich der Gassack und füllt zunächst das Dreieck zwischen Frontscheibe und Instrumententafel. Anschließend wird der untere Stapel 42 nachgezogen, der sich dann in Richtung des Fahrzeuginsassen, in den Figuren 2 und 3 nach links ausbreitet, wobei die Wucht der Ausbreitung durch das Nachziehen des unteren Stapels 42 in vorteilhafter Weise gehemmt wird.

Die Anordnung des Gasgenerators 14 seitlich des Gassackpaketes 16 führt vorteilhafterweise zu einer geringen Einbautiefe des Gassackmoduls 10. Außerdem gibt die Anordnung des Gasgenerators 14 in Verbindung mit dem Austrittskanal 38 des Diffusorblechs und der trichterförmigen Mündung des Gehäuses 12 die Austrittsrichtung in der Weise vor, daß der Gassack 16 nicht zur Frontscheibe 24 hin ausgeworfen wird, wie bei Gassack-Modulen mit unten liegendem Gasgenerator, sondern etwa unter einem Winkel von 20 bis 70° zur Horizontalen, also fast parallel zur Frontscheibe 24.

Wie deutlich zu sehen ist, läßt die relativ zur maximalen Breite des Gassackpaketes geringe Breite der Austrittsöffnung 26 eine kleinere Abdeckklappe 20 zu, als es bei einer Austrittsöffnung möglich wäre, die sich über die gesamte Breite des Gassackpaketes erstreckte. Das Gassackmodul 10 kann daher nahe zur Frontscheibe 24 eingebaut werden. Ein weiterer Vorteil des frontscheibennahen Einbauortes für das Gassackmodul, besteht darin, daß sich die Abdeckklappe nicht mehr im normalen Interaktionsbereich des Fahrzeuginsassen befindet.

## Patentansprüche

1. Gassack-Modul (10) für ein Fahrzeuginsassen-Rückhaltesystem, mit einem Gehäuse (12) und einem Gassack (16), der zu einem Gassackpaket (42, 44) gefaltet im Gehäuse (12) angeordnet ist und durch Gas von einer Druckgasquelle (14) aufgeblasen werden kann, wobei das Gehäuse (12) eine Austrittsöffnung (26) aufweist, die eine Austrittsebene definiert, **dadurch gekennzeichnet, daß** die Breite der Austrittsöffnung (28) gemessen in einer Schnittebene quer zur Längeachse des Gassack-Moduls (10) geringer ist, als die größte Breite des Gassackpaketes (42, 44), gemessen in derselben Ebene parallel zur Austrittsebene.

2. Gassack-Modul nach Anspruch 1, **dadurch gekennzeichnet, daß** die Druckgasquelle (10) im Gehäuse (12) von der Austrittsebene aus gesehen neben dem Gassackpaket (42, 44) angeordnet ist.

3. Gassack-Modul nach Anspruch 2, **dadurch gekennzeichnet, daß** die Druckgasquelle (14) im Gehäuse (12) so angeordnet ist, daß der Gassack (16) unter einem Winkel von etwa 20 bis 70° zur Horizontalen aus dem Gehäuse (12) austritt.

## Claims

1. A gas bag module (10) for a vehicle occupant restraint system, the gas bag module comprising a housing (12) and a gas bag (16) which is folded up into a gas bag pack (42, 44), the gas bag being arranged in the housing (12) and adapted to be inflated by means of gas from a compressed gas source (14), the housing (12) having an outlet opening (26) which defines an outlet plane, **characterized in that** the width of the outlet opening (26) is smaller than the largest width of the gas bag pack (42, 44), measured parallel to the outlet plane.

2. The gas bag module according to Claim 1, **characterized in that** the compressed gas source (14), as seen from the outlet plane, is arranged in the housing (12) adjacent to the gas bag pack (42, 44).

3. The gas bag module according to Claim 2, **characterized in that** the compressed gas source (14) is arranged in the housing (12) in such way that the gas bag (16) comes out from the housing (12) at an angle of approximately 20° to 70° with respect to the horizontal.

## Revendications

1. Module de coussin à gaz (10) pour un système de retenue de passager de véhicule, comportant un boîtier (12) et un coussin à gaz (16) qui est agencé dans le boîtier (12) en étant plié pour former un paquet de coussin à gaz (42, 44) et qui peut être gonflé par du gaz provenant d'une source de gaz comprimé (14), le boîtier (12) présentant une ouverture de sortie (26) qui définit un plan de sortie, **caractérisé en ce que** la largeur de l'ouverture de sortie (26) est plus petite que la plus grande largeur du paquet de coussin à gaz (42, 44), mesurée parallèlement au plan de sortie.

2. Module de coussin à gaz selon la revendication 1, **caractérisé en ce que** la source de gaz comprimé (14) est agencée dans le boîtier (12) à côté du paquet de coussin à gaz (42, 44), vu depuis le plan de sortie.

3. Module de coussin à gaz selon la revendication 2, **caractérisé en ce que** la source de gaz comprimé (14) est agencée dans le boîtier (12) de telle sorte que le coussin à gaz (16) sort du boîtier (12) sous un angle d'approximativement 20 à 70° par rapport à l'horizontale.
